# EUROPEAN PATENT APPLICATION

(11) **EP 2 113 723 A2**
(43) Date of publication of application: **04.11.2009**
(21) Application number: 09158815.2
(22) Date of filing: 27.04.2009
(51) Int. Cl.: F24F 1/00, F24F 12/00

(54) **Ventilating apparatus**

(30) Priority: 01.05.2008 KR 20080040991
(71) Applicant: LG Electronics Inc., Seoul 150-721 (KR)
(72) Inventor: Han, Sung Won, 153-802, Seoul (KR); Kim, Kyung Hwan, 153-802, Seoul (KR); Choi, Keun Hyoung, 153-802, Seoul (KR)
(74) Representative: Vossius & Partner

(57) **Abstract**

A ventilating apparatus (1) is disclosed, in which a ventilating function and a cooling and heating function are performed selectively or simultaneously within one casing (3). The ventilating apparatus comprises a casing (3); an air-supply path (A) provided inside the casing, guiding the outdoor air to a room; an air-exhaust path (B) provided inside the casing, guiding the room air to the outside; a pre-heat exchanger (12) arranged in the air-supply path and the air-exhaust path, generating heat exchange between the supplied outdoor air and the exhausted room air; and a heat exchanger (9) arranged in the air-supply path, generating heat exchanging between the supplied outdoor air and a predetermined refrigerant.

## Description

The present invention relates to a ventilating apparatus, and more particularly to, a ventilating apparatus, in which a ventilating function and a cooling and heating function can be performed simultaneously or selectively.

A ventilating apparatus is to flow out the room air and at the same time flow in the outdoor air, thereby maintaining freshness of the air in a room.

The ventilating apparatus basically includes a casing, a room air suction unit provided inside the casing to suck the room air, an outdoor air section unit, a blower fan, and a pre-heat exchanger enabling heat exchange between the room air and the outdoor air.

Recently, it is general that a ventilating apparatus and an air-conditioner are provided, wherein the ventilating apparatus serves to maintain freshness of the room air and at the same time control an inner temperature within a proper range, and the air-conditioner serves to perform cooling and heating.

However, it is general that the ventilating apparatus provided with a pre-heat exchanger and the air-conditioner provided with an indoor unit and an outdoor unit are separately provided within a building. In this case, a problem occurs in that more cost and more space are relatively consumed to arrange the ventilating apparatus and the air-conditioner.

In other words, if the ventilating apparatus and the air-conditioner are simultaneously provided, since a duct connected with the ventilating apparatus and a duct connected with the air-conditioner should be provided separately, problems occur in that pipe arrangement becomes complicated and the cost required for arrangement of the ventilating apparatus and the air-conditioner increases.

Furthermore, since the air exhausted to the room through the ventilating apparatus is the outdoor air heat-exchanged with the room air and the air exhausted out through the air-conditioner is the room air heat-exchanged with a refrigerant, two air flows of different temperatures occur in one space, whereby unbalanced distribution of temperature is caused.

Accordingly, the present invention is directed to a ventilating apparatus, which substantially obviate one or more problems due to limitations and disadvantages of the

### related art.

An object of the present invention is to provide a ventilating apparatus, in which a ventilating function and a cooling and heating function can be performed simultaneously or selectively.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a ventilating apparatus comprises a casing; an air-supply path provided inside the casing, guiding the outdoor air to a room; and air-exhaust path provided inside the casing, guiding the room air to the outside; a pre-heat exchanger arranged in the air-supply path and the air-exhaust path, generating heat exchange between the supplied outdoor air and the exhausted room air; and a heat exchanger arranged in the air-supply path, generating heat exchanging between the supplied outdoor air and a predetermined refrigerant.

Furthermore, the ventilating apparatus further comprises an air-supply fan unit provided inside the casing, supplying the outdoor air into the room; an air-exhaust fan unit exhausting the room air to the outside; a first inlet provided in the casing, flowing the outdoor air therein; and a second inlet provided in the casing, flowing the room air therein, wherein the air-supply path is formed between the air-supply fan unit and the first inlet, and the air-exhaust path is formed between the air-exhaust fan unit and the second inlet.

The heat exchanger is arranged between the air-supply fan unit and the pre-heat exchanger.

The pre-heat exchanger is arranged in a space formed between the heat exchanger and the first and second inlets.

The pre-heat exchanger includes a first path where the outdoor air flows, and a second path where the room air flows, the first path being connected with the first inlet, and the second path being connected with the second inlet.

The air-exhaust fan unit is provided at one side of the pre-heat exchanger, and the ventilating apparatus further comprises a section plate that sections the air-exhaust fan unit from the pre-heat exchanger.

The section plate includes a cutting part to form a path for moving the air exhausted from the second path to the air-exhaust fan unit.

The ventilating apparatus further comprises a heat exchanger supporter provided in the casing to support the heat exchanger and prevent the air exhausted from the second path from flowing to the air-supply fan unit.

The second inlet is arranged above the first inlet.

The ventilating apparatus further comprises a first switching damper opening and closing the first inlet; and a second switching damper opening and closing the space arranged between the second inlet and the heat exchanger.

The second switching damper is arranged between an upper part inside the casing and the pre-heat exchanger.

The air-exhaust fan unit is arranged between the pre-heat exchanger and the heat exchanger.

The pre-heat exchanger is provided in a type of a plurality of pre-heat exchangers connected with one another.

The air-exhaust fan unit includes an air-exhaust fan casing, an air-exhaust fan received in the air-exhaust fan casing, and an air-exhaust duct extended from the air-exhaust fan casing.

The ventilating apparatus further comprises a first switching damper provided in the first inlet; and a second switching damper provided to adjoin the pre-heat exchanger, opening and closing a connection space between the heat exchanger and the second inlet.

The second switching damper is rotatably provided at both sides of the pre-heat exchanger.

The first inlet and the second inlet are arranged in parallel.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view illustrating the first embodiment of the present invention;

FIG. 2 is an exploded perspective view illustrating the first embodiment of the present invention;

FIG. 3a and FIG. 3b are side sectional views illustrating a simultaneous operation mode according to the first embodiment of the present invention;

FIG. 4a and FIG. 4b are side sectional views illustrating a ventilating operation mode according to the first embodiment of the present invention;

FIG. 5a and FIG. 5b are side sectional views illustrating a cooling and heating operation mode according to the first embodiment of the present invention;

FIG. 6 is a perspective view illustrating the second embodiment of the present invention;

FIG. 7 is an exploded perspective view illustrating the second embodiment of the present invention;

FIG. 8 is a side sectional view illustrating a simultaneous operation mode according to the second embodiment of the present invention;

FIG. 9 is a side sectional view illustrating a ventilation operation mode according to the second embodiment of the present invention; and

FIG. 10 is a side sectional view illustrating a cooling and heating operation mode according to the second embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

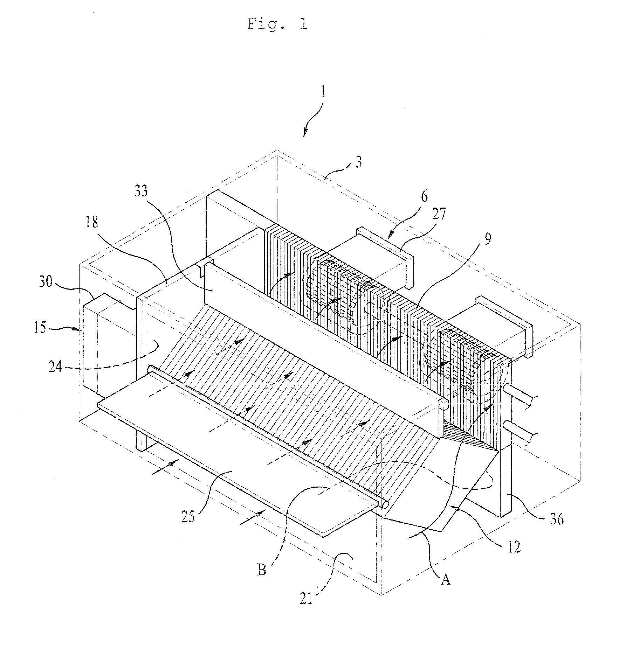

As illustrated in FIG. 1, a ventilating apparatus 1 according to the present invention includes a casing 3 constituting appearance, an air-supply fan unit 6 provided inside the casing 3, a heat exchanger 9 arranged at the rear of the air-supply fan unit 6, flowing a refrigerant therein, an pre-heat exchanger 12 provided to adjoin the heat exchanger 9, performing heat exchange between the room air and the outdoor air, and an air-exhaust fan unit 15 provided at one side of the pre-heat exchanger 12.

A section plate 18 is provided between the air-exhaust fan unit 15 and the pre-heat exchanger 12 to section the air-exhaust fan unit 15 and the pre-heat exchanger from each other.

Meanwhile, the casing 3 is respectively provided with a first inlet 21 into which the room air flows, a second inlet 24 into which the outdoor air flows. The casing 3 is also provided with a first outlet 27 where an outlet side of the air-supply fan unit 6 is arranged, and a second outlet where an outlet side of the air-exhaust fan unit 15 is arranged. In this case, it is preferable that the first inlet 21 and the second inlet 24 are arranged up and down.

The first inlet 21 is provided with a first switching damper that opens and closes the first inlet 21.

A second switching damper 33 is provided between the second inlet 24 and the heat exchanger 9 to open and close a path formed between the second inlet 24 and the heat exchanger 9. Preferably, the second switching damper 33 is rotatably arranged between an upper part inside the casing 1 and the pre-heat exchanger 12.

The second switching damper 33 opens and closes a space between the second inlet 24 and the heat exchanger 9. In this case, it is possible to control the air flowing into the second inlet 24 so that the air directly flows to the heat exchanger 9 without passing through the pre-heat exchanger 12.

Meanwhile, a heat exchanger supporter 36 is provided at a side of a lower part of the heat exchanger 9 to support the heat exchanger 9.

In this case, the first inlet 21, the pre-heat exchanger 12, the heat exchanger 9, and the air-supply fan unit 6 form an air-supply path A that supplies the outdoor air to the room.

The second inlet 24, the pre-heat exchanger 12, and the air-exhaust fan unit 15 form an air-exhaust path B that exhausts the room air to the outside.

In the above configuration, the first and second inlets 21 and 24 and the air-supply fan unit 6 and the air-exhaust fan unit 15 are respectively connected with a duct (not shown). The air flows in and out along the duct with respect to the ventilating apparatus 1.

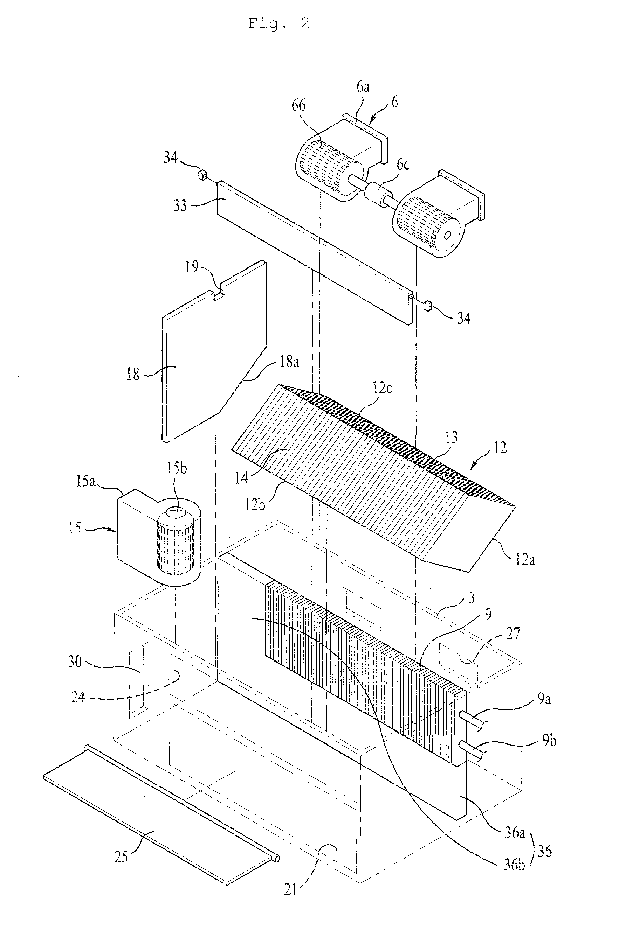

As illustrated in FIG. 2, the inside of the casing 3 is sectioned by the heat exchanger 9 and the heat exchanger supporter 36. The air-supply fan unit 6 is arranged in a part of the sectioned space, and the pre-heat exchanger 12 and the air-exhaust fan unit 15 are arranged in the other part of the sectioned space.

The air-supply fan unit 6 includes an air-supply fan casing 6a, an air-supply fan 6b received in the air-supply fan casing 6a, and a driving device 6c rotatably driving the air-supply fan 6b.

The air-exhaust fan unit 15 includes an air-exhaust fan casing 15a and an air-exhaust fan 15b received in the air-exhaust fan casing 15a.

Meanwhile, the section plate 18 that sections the pre-heat exchanger 12 from the air-exhaust fan unit 15 is provided with a cutting part 18a formed in a type of an incline plane to serve as a moving path if the air exhausted from the pre-heat exchanger 12 moves to the air-exhaust fan unit 15.

In this case, it is preferable that an incline angle of the cutting part 18a is provided to correspond to an incline part 12a formed at a side end of the pre-heat exchanger 12.

Meanwhile, an installation part 19 is formed at an upper part of the section plate 18. The installation part 19 is provided with a driving device 34 that rotates the second switching damper 33.

Preferably, the pre-heat exchanger 12 has a side section of a square shape, specifically a diamond shape. The pre-heat exchanger 12 includes a first path 13, and a second path 14 arranged to cross the first path 13. Boundary parts 12b and 12c are formed between the first path 13 and the second path 14.

In this case, if a part where the first and second inlets 21 and 24 are viewed is defined as the front side of the pre-heat exchanger 12 and a part where the heat exchanger 9 is viewed is defined as the rear side of the pre-heat exchanger 12, the first path 13 becomes a path that is connected from the front lower part to the rear upper part while the second path 14 becomes a path that is connected from the front upper part to the rear lower part. In this case, it is noted from the side section that these paths cross each other in an X-shape.

It is preferable that the boundary parts 12b and 12c of the pre-heat exchanger 12 are arranged to respectively adjoin an inner wall of the casing 3, in which the first and second inlets 21 and 24 are arranged, and the heat exchanger supporter 36.

Both sides of the pre-heat exchanger 12 should be laterally in contact with the inner wall of the casing 3 and the section plate 18 so as to prevent the wind from leaking out. In this case, the contact part may not form such a direct contact type. Namely, a separate sealing member (not shown) may be inserted to the contact part.

This is to separate the air-supply path A from the air-exhaust path B. Particularly, if the first inlet 21 and the second inlet 24 are arranged to be spaced apart from each other at a given interval up and down as illustrated in FIG. 2, it is preferable that the boundary part 12b adjoins the part between the first inlet 21 and the second inlet 24.

The heat exchanger supporter 36 includes a first supporter 36a that supports the lower surface of the heat exchanger 9, and a second supporter 36b that supports a side of the heat exchanger 9. The heat exchanger supporter 36 is arranged as above so as to support the heat exchanger 9 and at the same time to prevent the air, which is to be flown to the outside, from adjoining to the heat exchanger 9, thereby avoiding heat-exchange between the heat exchanger 9 and the air.

Hereinafter, the operation according to the first embodiment of the present invention will be described with reference to the accompanying drawings.

First of all, the operation mode of the ventilating apparatus according to the present invention includes a ventilating operation mode, a cooling and heating operation mode, and a simultaneous operation mode where the ventilating operation mode and the cooling and heating operation mode are simultaneously performed.

The simultaneous operation mode will be described.

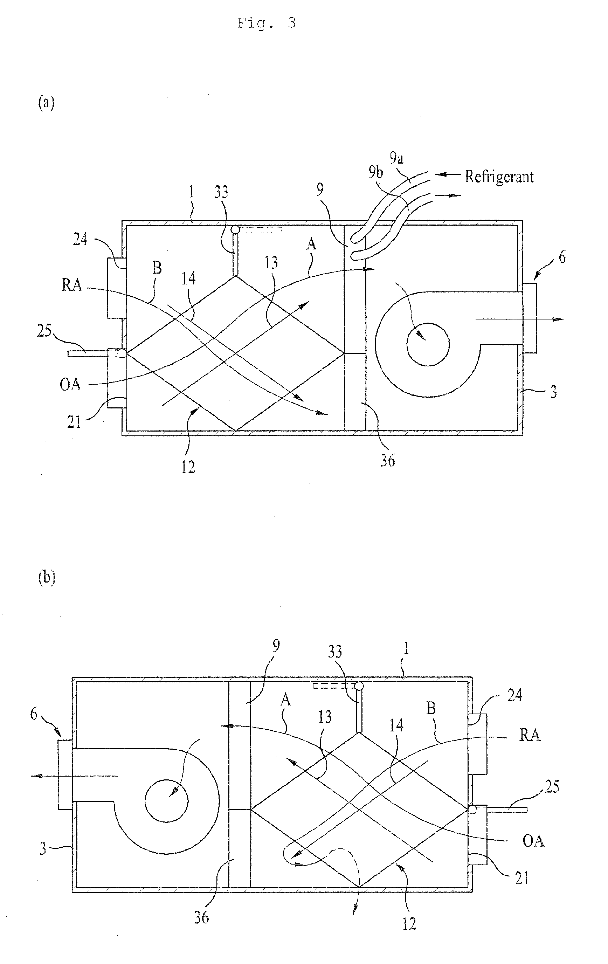

As illustrated in FIG. 3a and FIG. 3b, if the simultaneous operation mode is selected, the first switching damper 25 provided at the first inlet 21 is opened and at the same time the second switching damper 33 provided at the upper part of the pre-heat exchanger 12 is closed.

In this state, the air-supply fan unit 6 and the air-exhaust fan unit 15 (see FIG. 2) are operated in due order. The compressor connected with the ventilating apparatus is operated to transfer the refrigerant to refrigerant pipes 9a and 9b connected with the heat exchanger 9. Then, the refrigerant flows inside the heat exchanger 9.

If each of the above elements is operated as above, the outdoor air OA flows into the first inlet 21 and passes through the first path 13 provided in the pre-heat exchanger 12. Then, the air is exhausted to the room through the air-supply fan unit 6 after being exchanged with heat in the heat exchanger 9. The path where the outdoor air OA flows has been referred to as the air-supply path A.

As described above, the air-supply path A includes the first inlet 21, and a path formed by flow of the air passing through the pre-beat exchanger 12, the heat exchanger 9 and the air-supply fan unit 6.

Meanwhile, simultaneously with inflow of the outdoor air OA, the room air RA also flows toward the second inlet 24. After the air which has passed through the second inlet 24 passes through the second path 14 of the pre-heat exchanger 12, the air moves to the air-exhaust fan unit 15 and then is exhausted to the outside.

The path where the room air RA flows has been referred to as the air-exhaust path B.

As described above, the air-exhaust path B includes the second inlet 24, and a path formed by flow of the air passing through the pre-heat exchanger 12, and the air-exhaust fan unit 15.

In the aforementioned simultaneous operation mode, the room air RA and the outdoor air OA are mutually heat-exchanged in the pre-heat exchanger 12.

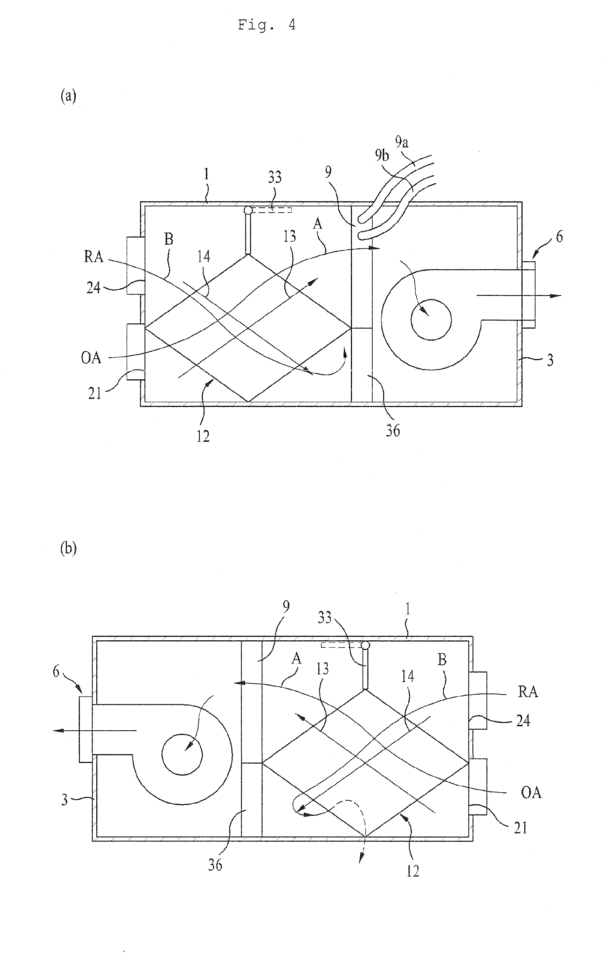

FIG. 4a and FIG. 4b illustrate that the ventilating operation mode is selected. In this case, the refrigerant does not flow into the heat exchanger 9. The outdoor air OA and the room air RA are heat-exchanged in the pre-heat exchanger 12. The outdoor air OA flows along the air-supply path A while the room air RA flows along the air-exhaust path B.

The operation of each element in the ventilating operation mode is the same as that of the simultaneous operation mode except that the refrigerant does not flow into the heat exchanger 9 and thus the outdoor air OA is not heat-exchanged in the heat exchanger 9. Accordingly, the detailed description of the operation of each element in the ventilating operation mode will be omitted.

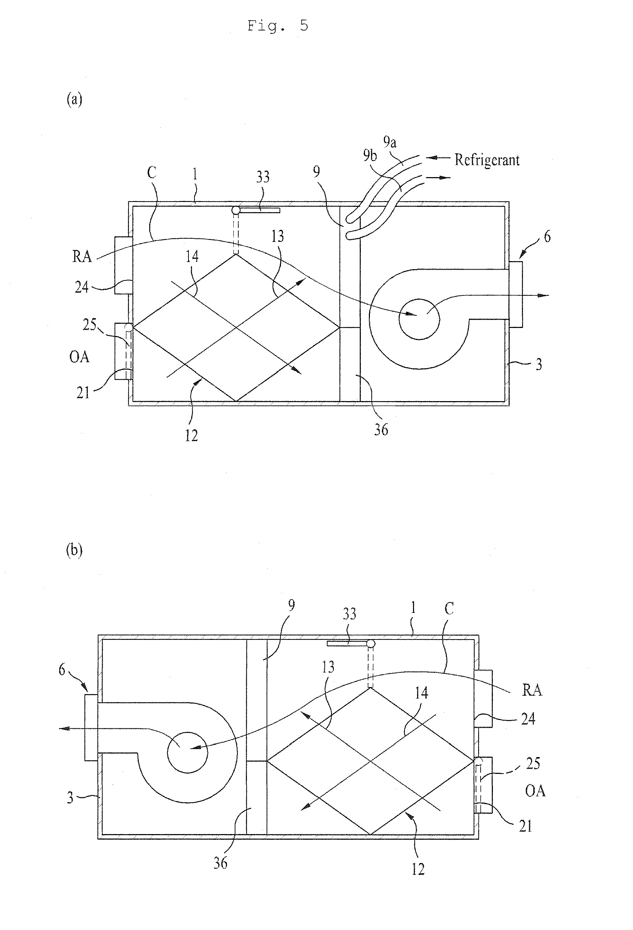

FIG. 5a and FIG. 5b illustrate that the cooling and heating operation mode is selected.

If the cooling and heating operation mode is selected, the room air RA is not exhausted to the outside but circulates inside the room. Also, the outdoor air OA should not flow into the ventilating apparatus.

Accordingly, the first inlet 21 is closed by the first switching damper 25 so as not to flow the outdoor air OA into the ventilating apparatus. The second switching damper 33 opens the space between the heat exchanger 9 and the second inlet 24 so that the room air RA directly moves to the heat exchanger 9 without passing through the pre-heat exchanger 12.

The air-supply fan unit 6 should start to be operated, and the air-exhaust fan unit 15 should be stopped.

The refrigerant is compressed in the compressor so that the air flown by the air-supply fan unit 6 is heat-exchanged in the heat exchanger 9. Then, the refrigerant flows into the heat exchanger 9 through the refrigerant pipes 9a and 9b.

Accordingly, if the cooling and heating operation mode is operated, the room air circulates in the same manner as a general air-conditioner, whereby room-cooling or room-heating are performed.

Hereinafter, the second embodiment of the present invention will be described with reference to the accompanying drawings.

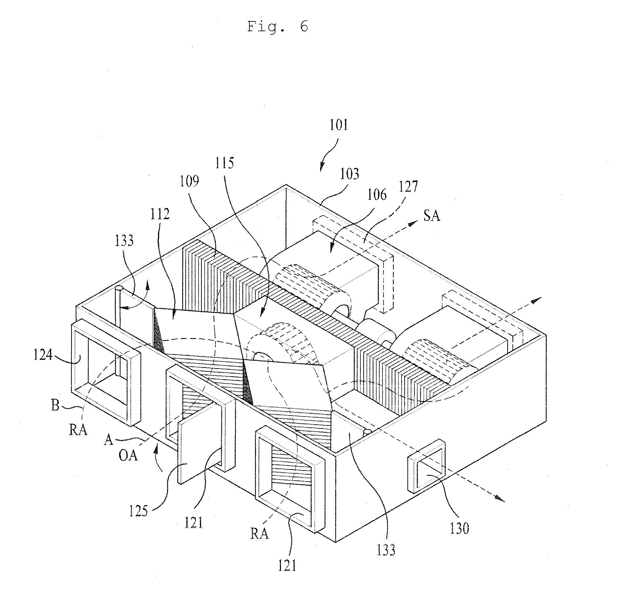

As illustrated in FIG. 6, the ventilating apparatus according to the second embodiment of the present invention includes a casing 103, an air-supply fan unit 106 provided inside the casing 103, a heat exchanger 109 arranged at the rear of the air-supply fan unit 106, and an air-exhaust fan unit 115 provided to adjoin the heat exchanger 109.

An exhaust part of the air-supply fan unit 106 is arranged in a first outlet 127 provided at a side of the casing 103.

Meanwhile, the heat exchanger 109 should be arranged between the air-exhaust fan unit 115 and the air-supply fan unit 106.

A pre-heat exchanger 112 is provided at one side of the air-exhaust fan unit 115 to perform heat exchange between the room air RA and the outdoor air OA. The casing 103 is provided with a first inlet 121 into which the outdoor air OA flows, and a second inlet 124 into which the room air RA flows. The first inlet 121 is provided with a first switching damper 125 that switches a flow of the air.

Preferably, the first inlet 121 and the second inlet 124 are arranged in parallel in left and right directions, and are spaced apart from each other.

Meanwhile, a second switching damper 133 is provided between the pre-heat exchanger 112 and an inner wall of the casing 103 to control a flow of the air, whereby the air flowing into the second inlet 124 directly flows into the heat exchanger 109.

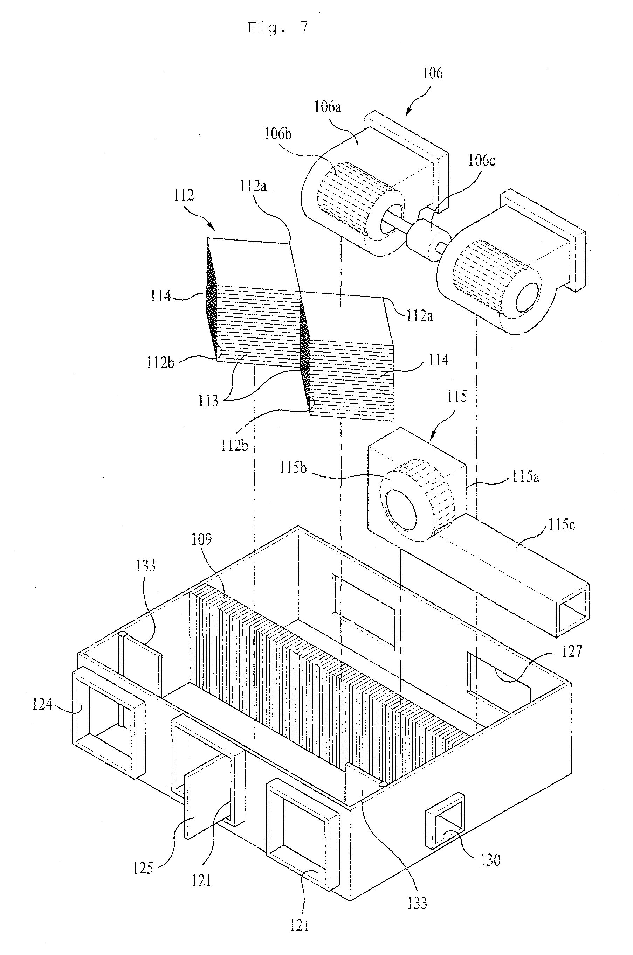

As illustrated in FIG. 7, it is preferable that the pre-heat exchanger 112 has an upper section of a square shape, specifically a diamond shape. Also, it is preferable that a plurality of pre-heat exchangers 112 are provided to adjoin one another.

In this case, the upper section of the pre-heat exchangers 112 has an arrangement where diamond shapes are continuously arranged. Preferably, the pre-heat exchangers 112 are arranged in such a manner that their corners are linearly in contact with one another.

At this time, since it is important that the air does not leak out through the contact part, a separate contact member that connects the respective pre-heat exchangers 112 with one another may preferably be provided.

The pre-heat exchanger 112 is provided with a first path 113 through which the outdoor air OA passes and a second path 114 through which the room air RA passes. Boundary parts 112a and 112b are provided at the corner of the pre-heat exchanger 112, and form the boundary between the first path 113 and the second path 114.

The boundary parts 112a and 112b should be arranged to adjoin the air-exhaust fan unit 115 and the casing 103. This is to allow the outdoor OA not to be mixed with the room air RA.

The boundary part 112a of the boundary parts adjoins an air-exhaust fan casing 115a constituting appearance of the air-exhaust fan unit 115, and the other boundary part 112b adjoins a part between the first inlet 121 and the second inlet 124.

In this case, the air-exhaust fan unit 115 is arranged to view the space formed between the boundary parts 112a of the respective pre-heat exchangers 112.

The air-exhaust fan unit 115 includes the air-exhausting fan casing 115a, an exhausting fan 115b, and an exhaust duct 115c extended from the exhaust fan casing 115a. The exhaust duct 115c is connected to a second outlet 130 formed in the casing 103.

In this case, the height of the exhaust duct 115c should be lower than the air-exhaust fan casing 115a. This is because that the outdoor air OA should flow above the exhaust duct 115c and then move to the heat exchanger 109.

Preferably, the contact part between the boundary part 112a of the pre-heat exchanger and the air-exhaust fan casing 115a and the contact part between the inner wall of the casing 103 and the boundary part 112b of the pre-heat exchanger are sealed such that the outdoor air OA is not mixed with the room air RA.

The second switching damper 133 provided at both sides of the pre-heat exchanger 112 is spaced apart from the second inlet 124 at a given interval and rotatably arranged in the inner wall of the casing 103.

Hereinafter, the operation according to the second embodiment of the present invention will be described with reference to the accompanying drawings.

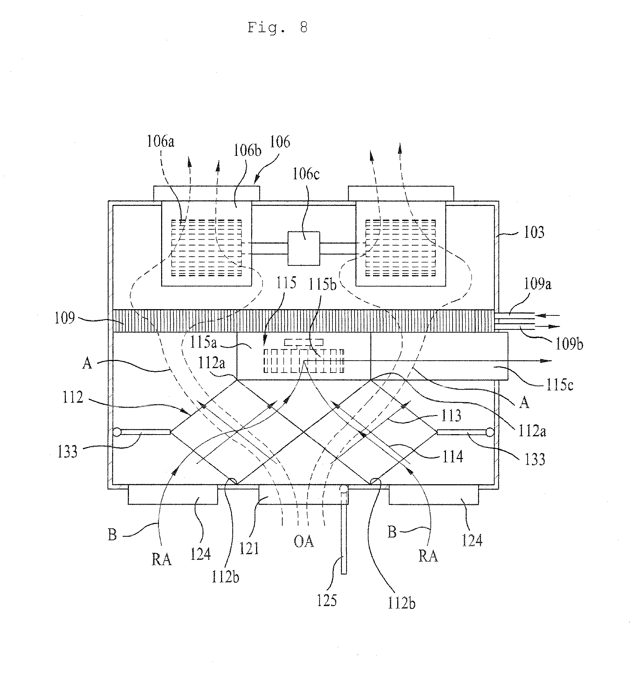

As illustrated in FIG. 8, if the simultaneous operation mode is operated, the first switching damper 125 opens the first inlet 121, and at the same time the air-supply fan unit 106 and the air-exhaust fan unit 115 are operated.

At this time, the second switching damper 133 should be closed, and the compressor supplies the refrigerant to the heat exchanger 109 while performing compression.

If each of the above elements is operated as above, the outdoor air OA flows into the room through the air-supply path A. The air-supply path A includes the first inlet 121, the first path 113 of the pre-heat exchanger 112, and a path forming a flow of the air between the heat exchanger 9 and the air-supply fan unit 106.

Meanwhile, simultaneously with inflow of the outdoor air OA, the room air RA also flows through the second inlet 124 and then exhausts out through the air-exhaust path B. The air-exhaust path B includes the second inlet 124, the second path 114 of the pre-heat exchanger 112, and a path forming a flow of the air between the heat exchanger and the air-exhaust fan unit 115.

As described above, the outdoor air OA and the room air RA flow along their respective path, and are crossed with each other and heat-exchanged in the pre-heat exchanger 112. If the simultaneous operation mode is operated, ventilation and cooling and heating can be performed by one operation mode in due order.

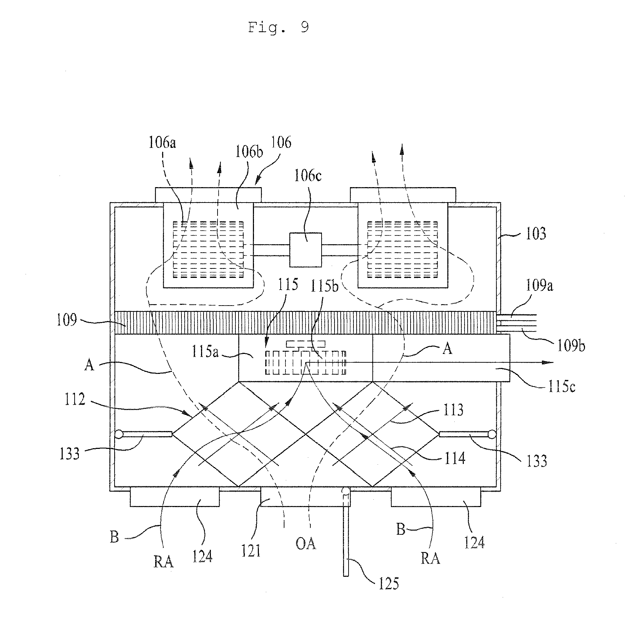

FIG. 9 illustrates that the ventilating operation mode is selected. The operation of each element in the ventilating operation mode is the same as that of the simultaneous operation mode except that the refrigerant does not flow into the heat exchanger 109 and thus heat exchange is not performed between the refrigerant and the outdoor air OA. Accordingly, the detailed description of the operation of each element in the ventilating operation mode will be omitted.

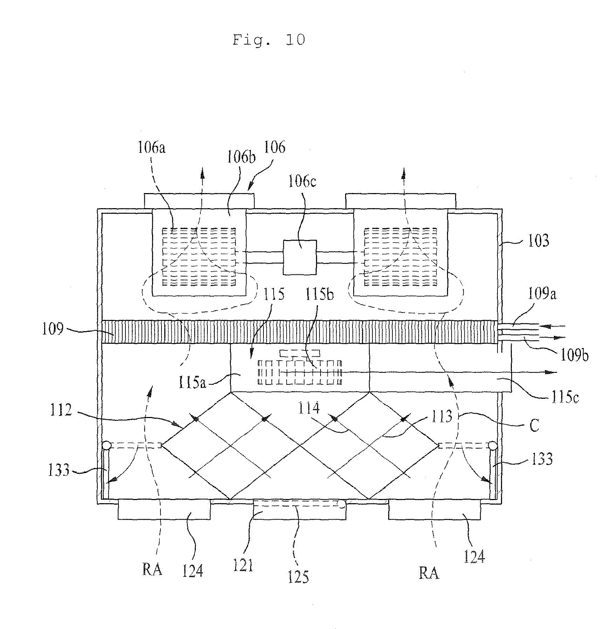

FIG. 10 illustrates that the cooling and heating operation mode is selected. In this case, the air-supply fan unit 106 is operated but the air-exhaust fan unit is not operated.

In case of the cooling and heating operation mode, only the room air RA continues to circulate. Since inflow of the outdoor air OA is not required, the first inlet 121 is closed by the first switching damper 125.

By contrast, since the room air RA should directly flow into the heat exchanger 109 without passing through the pre-heat exchanger 112, the second switching damper 133 is opened to connect the second inlet 124 with the heat exchanger 109.

The compressor is operated to flow the refrigerant into the heat exchanger 109.

Accordingly, if the air-supply fan unit 106 is operated, the room air RA flows into the second inlet 124 like C by inflow action of the air and then directly moves to the heat exchanger 109, whereby the air is heat-exchanged with the refrigerant and then exhausted to the room through the air-supply fan unit 106.

As will be apparent from the first embodiment and the second embodiment, since heat exchange between the refrigerant and the air and heat exchange between the room air and the outdoor air can occur in one casing, the product of a compact size can be obtained and space efficiency in installation of the product can be obtained.

As described above, according to the present invention, ventilation and cooling and heating are performed within a building and at the same time sizes of the units required for ventilation and cooling and heating can be minimized to improve space efficiency.

Since the units and pipes to be arranged are reduced, the cost required for arrangement and purchase of the product can be reduced.

Finally, if the air is exhausted to the room, the exhausted air is distributed at a uniform temperature. Also, air-conditioning can be performed suitably for a setting range of the user with respect to the fresh air from the outside. Accordingly, a comfortable room atmosphere can be obtained.

## Claims

1. A ventilating apparatus comprising:
a casing;
an air-supply path provided inside the casing, guiding the outdoor air to a room;
an air-exhaust path provided inside the casing, guiding the room air to the outside;
a pre-heat exchanger arranged in the air-supply path and the air-exhaust path, generating heat exchange between the supplied outdoor air and the exhausted room air; and
a heat exchanger arranged in the air-supply path, generating heat exchanging between the supplied outdoor air and a predetermined refrigerant.

2. The ventilating apparatus of claim 1, further comprising:
an air-supply fan unit provided inside the casing, supplying the outdoor air into the room;
an air-exhaust fan unit provided inside the casing , exhausting the room air to the outside;
a first inlet provided in the casing, flowing the outdoor air therein; and
a second inlet provided in the casing, flowing the room air therein,
wherein the air-supply path is formed between the air-supply fan unit and the first inlet, and the air-exhaust path is formed between the air-exhaust fan unit and the second inlet.

3. The ventilating apparatus of claim 2, wherein the heat exchanger is arranged between the air-supply fan unit and the pre-heat exchanger.

4. The ventilating apparatus of claim 3, wherein the pre-heat exchanger is arranged in a space formed between the heat exchanger and the first and second inlets.

5. The ventilating apparatus of claim 4, wherein the pre-heat exchanger includes a first path where the outdoor air flows, and a second path where the room air flows, the first path being connected with the first inlet, and the second path being connected with the second inlet.

6. The ventilating apparatus of claim 4,
wherein the air-exhaust fan unit is provided at one side of the pre-heat exchanger, the ventilating apparatus further comprising a section plate that sections the air-exhaust fan unit from the pre-heat exchanger,
wherein the section plate includes a cutting part to form a path for moving the air exhausted from the second path to the air-exhaust fan unit.

7. The ventilating apparatus of claim 4, further comprising a heat exchanger supporter provided in the casing to support the heat exchanger and prevent the air exhausted from the second path from flowing to the air-supply fan unit.

8. The ventilating apparatus of claim 4, wherein the second inlet is arranged above the first inlet.

9. The ventilating apparatus of claim 2, further comprising:
a first switching damper opening and closing the first inlet; and
a second switching damper opening and closing the space arranged between the second inlet and the heat exchanger,
wherein the second switching damper is arranged between an upper part inside the casing and the pre-heat exchanger.

10. The ventilating apparatus of claim 2, wherein the air-exhaust fan unit is arranged between the pre-heat exchanger and the heat exchanger.

11. The ventilating apparatus of claim 10, wherein the pre-heat exchanger is provided in a type of a plurality of pre-heat exchangers connected with one another.

12. The ventilating apparatus of claim 10, wherein the air-exhaust fan unit includes an air-exhaust fan casing, an air-exhaust fan received in the air-exhaust fan casing, and an air-exhaust duct extended from the air-exhaust fan casing.

13. The ventilating apparatus of claim 10, further comprising:
a first switching damper provided in the first inlet; and
a second switching damper provided to adjoin the pre-heat exchanger, opening and closing a connection space between the heat exchanger and the second inlet.

14. The ventilating apparatus of claim 13, wherein the second switching damper is rotatably provided at both sides of the pre-heat exchanger.

15. The ventilating apparatus of claim 10, wherein the first inlet and the second inlet are arranged in parallel.
